# EUROPÄISCHE PATENTSCHRIFT

(11) **EP 1 386 811 B1**
(45) Veröffentlichungstag und Bekanntmachung des Hinweises auf die Patenterteilung: **14.09.2011**
(21) Anmeldenummer: 03016545.0
(22) Anmeldetag: 24.07.2003
(51) Int. Cl.: B60T 17/02, B60T 11/32

(54) **Druckluftversorgungseinrichtung für Fahrzeug-Druckluftanlage**
Compressed air supply installation for compressed air systems of vehicles
Installation d'alimentation en air comprimé pour des installations d'air comprimé de véhicules

(30) Priorität: 26.07.2002 DE 10234193
(43) Veröffentlichungstag der Anmeldung: 04.02.2004
(73) Patentinhaber: KNORR-BREMSE Systeme für Nutzfahrzeuge GmbH, 80809 München (DE)
(72) Erfinder: Hilberer, Eduard, 68766 Hockenheim (DE)

(56) Entgegenhaltungen:
- EP-A- 1 122 140
- DE-A- 19 834 705
- DE-A- 19 835 638

## Beschreibung

Die Erfindung betrifft eine Druckluftversorgungseinrichtung für Fahrzeug-Druckluftanlagen umfassend ein Mehrkreisschutzventil, einen Druckregler, ein Vorsteuerventil, eine Versorgungsleitung zur Versorgung der Kreise des Mehrkreisschutzventils mit Druckluft, und einen Kompressor, der mittels einer pneumatischen Schaltvorrichtung schaltbar ist.

Derartige Druckluftversorgungseinrichtungen sind bekannt. Beispielsweise ist eine derartige Druckluftversorgungseinrichtung aus der DE 100 04 091 A1 der Anmelderin bekannt. Bei der aus der DE 100 04 091 A1 bekannten Druckluftversorgungseinrichtung für Fahrzeug-Druckluftanlagen ist es schon möglich mit einfachen Mitteln eine effiziente Schaltung der dort verwendeten Kompressoren in oder für Druckluftversorgungseinrichtungen für Fahrzeug-Druckluftanlagen zur Verfügung zu stellen, wobei eine geringe Baugröße realisierbar ist.

Bei der aus der DE 198 34 705 A1 der Anmelderin bekannten Druckluftversorgungseinrichtung für Fahrzeug-Druckluftanlagen wird ein pneumatisches Stellglied, das einen Schaltkompressor schaltet über ein Vorsteuerventil gesteuert, das ausschließlich hierfür Verwendung findet. Der Druckregler wird hingegen von einem anderen Ventil, nämlich einem Magnetventil gesteuert, das auch das Vorsteuerventil für das Stellglied des Schaltkompressors steuert. Das Vorsteuerventil, das das Stellglied des Schaltkompressors steuert, wird über eine Vorsteuerventilversorgungsleitung mit Druckluft aus einem durch ein Rückschlagventil gesichertes Mehrkreisschutzventil versorgt und steuert das Stellglied über eine separate Steuerleitung. Je nachdem, ob der Schaltkompressor fördern soll oder nicht, wird die Steuerleitung belüftet oder entlüftet.

Es ist Aufgabe der vorliegenden Erfindung, mit einfachen Mitteln ein effizientes Schalten von Kompressoren in oder für Druckluftversorgungseinrichtungen für Fahrzeug-Druckluftanlagen zu ermöglichen, wobei die Standzeit der Kompressoren möglichst lang sein soll. Es ist ferner Aufgabe der vorliegenden Erfindung, die Kosten für entsprechende Druckluftversorgungseinrichtungen möglichst gering zu halten.

Gelöst wird diese Aufgabe durch eine Druckluftversorgungseinrichtung für Fahrzeug-Druckluftanlagen umfassend ein Mehrkreisschutzventil, einen Druckregler, ein Vorsteuerventil, eine Versorgungsleitung zur Versorgung der Kreise des Mehrkreisschutzventils mit Druckluft, und einen Kompressor, der mittels einer pneumatischen Schaltvorrichtung schaltbar ist, wobei das Vorsteuerventil mit der Schaltvorrichtung über ein Schnellentlüftungsventil verbunden ist, das einen mit dem Vorsteuerventil verbundenen Eingang, einen mit der Schaltvorrichtung über eine pneumatische Steuerleitung verbundenen Ausgang und einen Atmosphärenausgang aufweist, wobei das Vorsteuerventil den Druckregler und die Schaltvorrichtung steuert, wobei das Schnellentlüftungsventil ausgebildet ist, zur Belüftung der pneumatischen Steuerleitung zur Schaltvorrichtung am mit dem Vorsteuerventil verbundenen Eingang des Schnellentlüftungsventils anliegende Druckluft in Richtung auf die Schaltvorrichtung durchzulassen und zur Entlüftung der Steuerleitung die pneumatische Steuerleitung zur Schaltvorrichtung bei einem Invertieren des Vorsteuerventils über den Atmosphärenausgang des Schnellentlüftungsventils zu entlüften.

Durch diese erfindungsgemäße Lösung ist ein effizientes Schalten des Kompressors möglich, wobei insbesondere ein Schaltkompressor bzw. Energiesparkompressor sehr effizient und schnell geschaltet werden kann, so dass die Lebensdauer und damit die Standzeit derartiger Kompressoren deutlich erhöht werden kann.

Entsprechende Energiesparkompressoren bzw. energiesparende Schaltkompressoren sind bspw. aus der DE 39 09 531 A1 oder der DE 195 29 684 C2 bekannt. Bei dem Energiesparkompressor gemäß der DE 39 09 531 A1 wird durch einen Druckregler der Kolbenverdichter geregelt, wobei eine optimale Leistungseinsparung erwünscht ist. Hierbei wird das Saugventil in der Leerlaufphase in eine inaktive Position geschaltet. Zu diesem Zweck wird die Sauglamelle des Saugventils mittels eines über einen Übersetzungshebel auf sie einwirkenden Betätigungskolbens aus der Pumpstellung in die Abschaltstellung bzw. Leerlaufstellung an der Unterseite des Ventilträgers verschoben, derart, daß die Saugöffnungen des Kolbenverdichters wenigstens teilweise geöffnet, also von der Sauglamelle nicht vollständig überdeckt, sind. Des weiteren überdeckt die Sauglamelle in der Leerlaufphase wenigstens teilweise die Drucköffnungen des Druckventils des Kolbenverdichters, um in der Leerlaufphase ein weiteres Fördern in Richtung des Verbrauchers zu verhindern. Außerdem ist innerhalb des Zylinderkopfes zwischen dem Sauganschluß des Kolbenverdichters und der das Saugventil und das Druckventil tragenden Ventilträgerplatte des Kolbenverdichters ein Rückschlagventil, vorzugsweise in Form eines Rückschlag-Lamellenventils, angeordnet, welches in Richtung des Saugraums öffnet und in Richtung der an den Sauganschluß angeschlossenen Saugleitung sperrt.

Bei der Abschalt- bzw. Leerlaufphase dieses Energiesparkompressors bzw. Kolbenverdichters werden die Drucköffnungen des Kompressors wenigstens teilweise geschlossen, so daß kein unnötiges Abblasen von Luft geschieht. Als Folge hiervon ist es nur erforderlich, ein den Leckageverlusten entsprechendes geringes Volumen über das im Zylinderkopf befindliche Rückschlagventil anzusaugen, wenn der Kolben des Verdichters in Leerlaufstellung der Sauglamelle eine Saugbewegung vollzieht. Bei vollständig geschlossenen Drucköffnungen des Verdichters reduziert sich die zusätzlich anzusaugende Luftmenge aus der Saugleitung auf das tatsächlich existierende Leervolumen im Zylinder bzw. im Verdichtungsraum.

Aus der DE 195 29 684 C2 ist auch ein entsprechender Kolbenverdichter bzw. energiesparender Schaltkompressor bzw. Energiesparkompressor bekannt, der mit einer gegenüber einem Ventilträger des Kolbenverdichters wirkenden Sauglamelle, die zur Verwendung in einem Energiesparsystem zwischen einer der Pumpphase entsprechenden Position am Ventilträger und einer der Leerlaufphase entsprechenden Position bewegbar ist, wobei in der Leerlaufphase die Drucköffnungen des Ventilträgers durch die Sauglamelle abgedeckt sind, während die Saugöffnungen des Ventilträgers teilweise freigelegt sind, wobei die Sauglamelle als eine zwischen Ventilträger und Verdichtergehäuse gehalterte, durch Betätigungsmittel relativ zum Ventilträger drehbare Scheibe ausgebildet ist, wobei die Scheibe aus einem in der Pumphase gegenüber den Saugöffnungen wirkenden Funktionsteil und einem mit dem Funktionsteil verbundenen Ruheteil besteht. Im Ruheteil befinden sich hierbei Drucköffnungen, die in der Pumphase mit den Drucköffnungen des Ventilträgers fluchten. Es sind ferner zu beiden Seiten des Funktionsteils im Material des Ruheteils Aussparungen vorgesehen, die nach Drehung der Sauglamelle in die der Leerlaufphase entsprechenden Position einen Teilbereich der Saugöffnungen des Ventilträgers überlappend freilegen, während die im Ruheteil vorgesehenen Drucköffnungen nach Drehung der Sauglamelle gegenüber den Drucköffnungen des Ventilträgers seitlich versetzt sind, derart, daß die Drucköffnungen des Ventilträgers in der Leerlaufphase abgedeckt sind.

Von der Anmelderin wird bei entsprechenden Druckluftversorgungseinrichtungen auch ein entsprechender Energiesparkompressor verwendet, beziehungsweise Kompressoren mit Energie-Spar-System (ESS) eingesetzt. Die Wirkungsweise eines derartigen Energiesparkompressors ist dergestalt, daß in der Leerlaufphase des Kompressors die Sauglamelle aus der Förderstellung in die Leerlaufstellung verschoben wird. Dabei werden die Auslaßbohrungen geschlossen, die Ansaugbohrungen werden freigegeben und damit der Saugraum im Zylinderkopf dem Kompressionsraum zugeschaltet. Ein Rückschlagventil im Saugraum verhindert das Rückströmen der angesaugten Luft in das Ansaugrohr. In diesem Zustand arbeitet der Kompressor in einem geschlossenen Kreisprozeß - lediglich Reibung, Leckströmung und Wärmeverlust erfordern minimale Antriebsenergie. Im Kompressionsraum erfolgt keine Druckumkehr mehr, dadurch sinkt der Ölverbrauch.

Das Verschieben der Sauglamelle übernimmt der Schaltkolben, der im Kompressor integrierten Schalteinrichtung. Die Schalteinrichtung wird vom Druckregler gesteuert. In der Leerlaufphase wirkt der Systemdruck als Steuerdruck auf den Schaltkolben und verschiebt ihn bis in die Endstellung. Diese Bewegung wird über den Mitnehmerstift und einen Hebel auf die Sauglamelle übertragen. Sobald der Druckregler wieder auf Fördern umschaltet und dabei die Steuerleitung entlüftet, bewegt eine Druckfeder den Schaltkolben einschließlich Sauglamelle in die Ausgangslage zurück.

Bei den vorbeschriebenen Schaltkompressoren bzw. Energiesparkompressoren ist es notwendig, daß die Lamelle, die vom Stellglied geschaltet wird bzw. verschoben wird, beim Entlüften des Stellgliedes schnell verschoben werden, um eine Beschädigung der Lamelle zu verhindern. Eine Beschädigung der Lamelle kann dann geschehen, wenn das Schalten eine zu große Zeit in Anspruch nimmt, so daß bspw. beim Schalten in die Förderphase die Schubbewegung der Lamelle, die mit Schließvorgängen überlagert ist, zu einer hohen Belastung der Lamelle führt. Aus diesem Grunde ist eine sehr effiziente Schaltung erwünscht. Eine derartige effiziente und sehr schnelle Schaltung ist mittels der Erfindung möglich.

Vorzugsweise ist die Schaltvorrichtung ein Schaltglied oder ein Stellglied. Unter Steuerung des Druckreglers wird im Rahmen dieser Erfindung insbesondere die Betätigung eines Ablaß- oder Sicherheitsventils des Druckreglers verstanden.

Vorzugsweise ist das Vorsteuerventil ein Magnetventil. Durch diese Maßnahme ist ein einfaches Ansteuern bzw. Schalten des Vorsteuerventils möglich.

Wenn vorzugsweise der Druckregler das Vorsteuerventil umfaßt, ist eine sehr kompakte Bauform möglich.

Ferner vorzugsweise ist eine Steuer- und/oder Regelelektronik vorgesehen, die das Vorsteuerventil steuert und/oder regelt. Ferner vorzugsweise verbindet die Versorgungsleitung den Druckregler mit dem Mehrkreisschutzventil.

Wenn vorzugsweise wenigstens ein Drucksensor vorgesehen ist, ist ein energiesparender Betrieb des Schaltkompressors bzw. der Druckluftversorgungseinrichtung auf einfach Art und Weise möglich.

Vorzugsweise ist wenigstens ein Drucksensor zum Messen des Drucks in der Verbindungsleitung vorgesehen. Die Verbindungsleitung ist vorzugsweise eine Belüftungsbohrung und insbesondere vorzugsweise eine zentrale Belüftungsbohrung. Vorzugsweise sind der Druckregler und das Mehrkreisschutzventil in einer Baueinheit untergebracht. Diese Baueinheit kann insbesondere vorzugsweise auch den Kompressor enthalten. Vorzugsweise ist der Druckregler elektropneumatisch. Vorzugsweise ist das Mehrkreisschutzventil elektropneumatisch. Ferner vorzugsweise ist das Mehrkreisschutzventil ein Vierkreisschutzventil.

Wenn vorzugsweise wenigstens ein Drucksensor zum Messen des Drucks in der Verbindungsleitung vorgesehen ist, kann eine sinnvolle Steuerung oder Regelung des Kompressors mittels nur des wenigstens einen Drucksensors geschehen.

Wenn vorzugsweise zwischen dem Druckregler und der Verbindungsleitung und insbesondere dem Drucksensor zum Messen des Drucks in der Verbindungsleitung ein Sperrventil, insbesondere ein Rückschlagventil, vorgesehen ist, ist ein sicherer Betrieb der Druckluftversorgungseinrichtung möglich.

Wenn vorzugsweise Druck in oder hinter jedem Kreis des Mehrkreisschutzventils mittels Drucksensoren messbar ist, ist außer der Regelung oder Steuerung des Kompressors auch die Zufuhr von Druckluft in die Verbraucherkreise und die Entnahme von Druckluft zur Überleitung von einem Kreis in den anderen steuerbar oder regelbar.

Wenn vorzugsweise zwischen dem Vorsteuerventil und dem Schaltglied eine Drossel vorgesehen ist, kann bei einem Bruch der Leitung zum Stellglied ein noch ausreichender Staudruck in der Druckluftversorgungseinrichtung vorherrschen, um den Druckregler zu schalten. Ein schnelles Schalten wird vorzugsweise dadurch realisiert, dass der Nennquerschnitt des Vorsteuerventils, insbesondere des Magnetventils, grösser ist, als der Nennquerschnitt der Drossel. Je grösser das Verhältnis der jeweiligen Nennquerschnitte, umso schneller ist ein Schalten insbesondere der Druckluftversorgungseinrichtung möglich. Vorzugsweise ist die Drossel in das Gehäuse einsteckbar. Ferner vorzugsweise sind Drosseln mit verschiedenen Nennquerschnitten jeweils einsteckbar.

In einer besonders bevorzugten Ausführungsform der Erfindung ist der Kompressor ein Energiesparkompressor.

Da erfindungsgemäß ein Vorsteuerventil vorgesehen ist, das den Druckregler und die Schaltvorrichtung steuert, kann ein weiteres Vorsteuerventil eingespart werden und ferner entsprechende Bohrungen zu diesem weiteren Vorsteuerventil. Durch Einsparung eines weiteren Vorsteuerventils ist es möglich die Baugröße entsprechender Druckluftversorgungseinrichtungen klein zu halten. Ferner sind höhere Schaltgeschwindigkeiten dadurch zu erzielen, dass die Ansprechzeit des weiteren Vorsteuerventils, dass im Vergleich zur DE 198 34 705 A1 wegfällt, nicht mehr zu berücksichtigen ist. Erfindungsgemäß schaltet ein einziges Vorsteuerventil nämlich zugleich den Druckregler und das pneumatische Stellglied über das Schnellentlüftungsventil.

Erfindungsgemäß ist eine Druckluftanlage mit einer Druckluftversorgungseinrichtung der vorgenannten Art versehen.

Die Erfindung wird nachstehend ohne Beschränkung des allgemeinen Erfindungsgedankens anhand eines Ausführungsbeispiels unter Bezugnahme auf die Zeichnung exemplarisch beschrieben, auf die im Übrigen bezüglich der Offenbarung aller im Text nicht näher erläuterten erfindungsgemäßen Einzelheiten ausdrücklich verwiesen wird. Es zeigt:

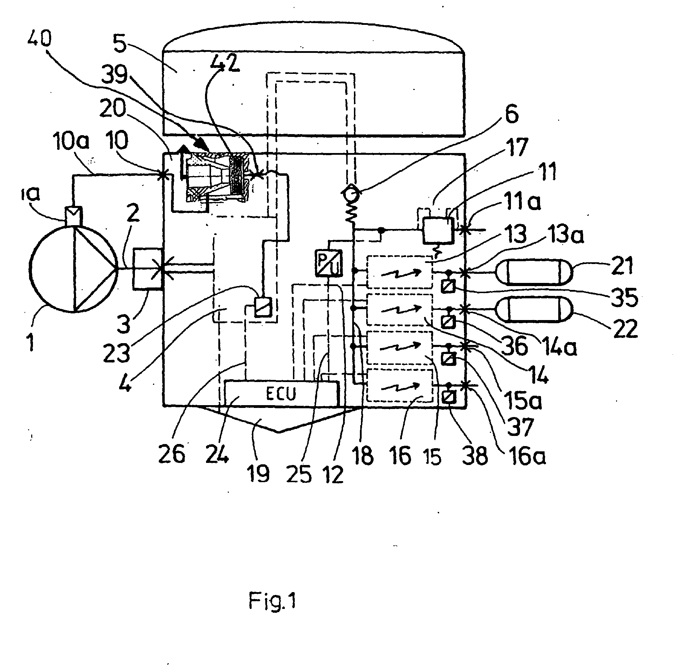

Fig. 1 eine erfindungsgemäße Ausführungsform in schematischer Darstellung.

Fig. 1 zeigt eine erfindungsgemäße Ausführungsform einer Druckluftversorgungseinrichtung für Fahrzeug-Druckluftanlagen. Die Druckluftversorgungseinrichtung umfasst einen Lufttrockner 5 und ein gemeinsames Gehäuse 20. Ein Energiesparkompressor 1 ist über eine Kompressorleitung 2 mit einem Eingangsstutzen 3 an dem gemeinsamen Gehäuse angebracht. In dem gemeinsamen Gehäuse sind ferner ein elektropneumatischer Druckregler 4 und ein Vierkreisschutzventil angeordnet. Die von dem Vierkreisschutzventil gelangenden Luftdrücke werden von den einzelnen Drucksteuereinheiten bzw. Kreisen 13 bis 16 über entsprechende Anschlussstutzen 13a bis 16a zu Behältern für die jeweiligen Kreise 21 und 22 geleitet. In der Fig. 1 sind lediglich zwei der vier Behälter dargestellt.

Die vom Energiesparkompressor 1 geförderte Druckluft wird über eine Kompressorleitung 2 zum Eingangsstutzen 3 der Druckluftversorgungseinrichtung zugeführt. Im Rahmen dieser Erfindung bedeutet Druckluftversorgungseinrichtung insbesondere auch eine Einrichtung, die sowohl einen Kompressor 1, die Kompressorleitung 2 und den Eingangsstutzen 3 umfasst, als auch eine die diese Komponenten in einem gemeinsamen Gehäuse 20 beinhaltet und auch eine Einrichtung, bei der der Kompressor mittels einer Leitung mit dem Gehäuse verbindbar ist. Von dem Eingangsstutzen 3 wird Druckluft dem elektropneumatischen Druckregler 4 und danach durch die Lufttrocknerpatrone 5 geführt. Nachgeordnet ist ein Rückschlagventil 6, von dem ausgehend eine zentrale Versorgungsbohrung 18 weitergeführt wird. Von der zentralen Druckluftversorgungsbohrung 18 werden die elektromechanischen Drucksteuereinheiten 13 bis 16 mit Druckluft versorgt. Die Drucksteuereinheiten werden von der gemeinsamen Steuerelektronik 24 angesteuert und geben die Druckluft über die zugehörigen Anschlussstutzen 11a bis 16a an Druckluftkreise des Fahrzeugs ab und zwar gemäß einstellbaren und/oder vorprogrammierbaren Parametern.

Erreicht der Druck, der durch den Drucksensor 12 hinter dem Rückschlagventil 6 gemessen wird, den oberen Schwellwert, so schaltet die gemeinsame Steuerelektronik 24 die Signalleitung 26 derart, dass die pneumatische Steuerleitung 10a über den Anschluss 10 belüftet wird, wodurch das pneumatische Stellglied 1a umschaltet und der Kompressor zu fördern aufhört. Dieses geschieht mittels Steuerung oder Regelung eines Schnellentlüftungsventils 40, dass mit einem Magnetventil 23 verbunden ist, das auch zur Steuerung oder Regelung des Druckreglers 4 vorgesehen ist. Bei der Steuerung oder Regelung des Druckreglers 4 wird insbesondere ein Ablass- oder Sicherheitsventil mittels des Magnetventils 23 betätigt. Der Messwert des gemessenen Drucks wird über die elektrische Verbindung 25 zur Steuerelektronik 24 geleitet.

Bei der Belüftung der Steuerleitung 10a gelangt Druckluft von dem Magnetventil 23 über eine Drossel 39 über den Eingang des Schnellentlüftungsventils und den mit kleinem Querschnitt versehenen Ausgang des Schnellentlüftungsventils zur Steuerleitung 10a. Wie in Fig. 1 dargestellt ist, umfasst das Schnellentlüftungsventil 40 zur Abdichtung einen Nutring 42, der in der schematischen Schnittdarstellung dunkel straffiert dargestellt ist.

Fällt der Druck in der Leitung 18 hinter dem Rückschlagventil 6 durch beispielsweise Luftentnahme wie beispielsweise beim Abbremsen des Fahrzeuges unter einen unteren Schwellwert, so wird durch die gemeinsame Steuerelektronik 24 über die Signalleitung 26 ein Invertieren des Magnetventils 23 hervorgerufen, wodurch das Schnellentlüftungsventil 40 gemäß Fig. 1 in die Position überführt wird, die zu einer schnellen Entlüftung der Steuerleitung 10a führt. In dieser Position ist ein wesentlich größerer Querschnitt für die Druckluft zur Entlüftung vorgesehen, so dass eine sehr schnelle Entlüftung möglich ist. Durch die sehr schnelle Entlüftung kann das Stellglied 1a den Schaltkompressor 1 bzw. den Energiesparkompressor auch sehr schnell und effizient schalten, so dass die Übergangszeit bzw. die Schaltzeit sehr kurz gehalten wird, so dass die Belastungen an der Lamelle bzw. den Lamellen sehr gering bleiben. Durch diese Maßnahme ist insbesondere eine lange Lebensdauer der Schaltkompressoren bzw. der Energiesparkompressoren ermöglicht.

Das Magnetventil 23 ist so dimensioniert, dass bei einem Bruch der Leitung 10a vor der Drossel 39 noch ein hinreichender Staudruck entsteht bzw. vorhanden ist, um den elektromechanischen Druckregler 4 zu schalten. Auch durch das Fehlen eines weiteren Vorsteuerventils und damit das Fehlen der Ansprechzeit dieses Vorsteuerventils, wird die Steuerleitung 10a schnell entlüftet. Durch die Entlüftung der Steuerleitung 10a wird das pneumatische Stellglied 1a wieder in seine Ausgangslage bewegt und der Kompressor beginnt schnell wieder zu fördern.

### Bezugszeichenliste

- 1: Energiesparkompressor
- 1a: pneumatisches Stellglied
- 2: Kompressorleitung
- 3: Eingangsstutzen
- 4: elektropneumatischer Druckregler
- 5: Lufttrocknerpatrone
- 6: Rückschlagventil
- 10: Anschluss
- 10a: pneumatische Steuerleitung
- 11: Überströmventil für Luftfederung
- 11a: Anschlussstutzen für Luftfederung
- 12: Drucksensor
- 13: elektromechanische Drucksteuereinheit für Kreis 1
- 13a: Anschlussstutzen für 13
- 14: elektromechanische Drucksteuereinheit für Kreis 2
- 14a: Anschlussstutzen für 14
- 15: elektromechanische Drucksteuereinheit für Kreis 3
- 15a: Anschlussstutzen für 15
- 16: elektromechanische Drucksteuereinheit für Kreis 4
- 16a: Anschlussstutzen für 16
- 18: zentrale Versorgungsbohrung
- 19: Zentralentlüftung
- 20: gemeinsames Gehäuse
- 21: Behälter für Kreis 1
- 22: Behälter für Kreis 2
- 23: Magnetventil
- 24: gemeinsame Steuerelektronik
- 25: elektrische Verbindung zum Drucksensor
- 26: elektrische oder elektronische Steuerleitung
- 35: Drucksensor
- 36: Drucksensor
- 37: Drucksensor
- 38: Drucksensor
- 39: Drossel
- 40: Schnellentlüftungsventil
- 42: Nutring

## Patentansprüche

1. Druckluftversorgungseinrichtung für Fahrzeug-Druckluftanlagen umfassend ein Mehrkreisschutzventil (13 bis 16), einen Druckregler (4), ein Vorsteuerventil (23), eine Versorgungsleitung (18) zur Versorgung der Kreise des Mehrkreisschutzventils (13 bis 16) mit Druckluft, und einen Kompressor (1), der mittels einer pneumatischen Schaltvorrichtung (1a) schaltbar ist, **dadurch gekennzeichnet, dass** das Vorsteuerventil (23) mit der Schaltvorrichtung (1a) über ein Schnellentlüftungsventil (40) verbunden ist, das einen mit dem Vorsteuerventil (23) verbundenen Eingang, einen mit der Schaltvorrichtung (1a) über eine pneumatische Steuerleitung (10a) verbundenen Ausgang und einen Atmosphärenausgang aufweist, wobei das Vorsteuerventil (23) den Druckregler (4) und die Schaltvorrichtung (1a) steuert, wobei das Schnellentlüftungsventil (40) ausgebildet ist, zur Belüftung der pneumatischen Steuerleitung (10a) zur Schaltvorrichtung (1a) am mit dem Vorsteuerventil (23) verbundenen Eingang des Schnellentlüftungsventils (40) anliegende Druckluft in Richtung auf die Schaltvorrichtung (1a) durchzulassen und zur Entlüftung der Steuerleitung (10a) die pneumatische Steuerleitung (10a) zur Schaltvorrichtung (1a) bei einem Invertieren des Vorsteuerventils (23) über den Atmosphärenausgang des Schnellentlüftungsventils (40) zu entlüften.

2. Druckluftversorgungseinrichtung nach Anspruch 1, **dadurch gekennzeichnet, dass** das Vorsteuerventil (23) ein Magnetventil ist.

3. Druckluftversorgungseinrichtung nach Anspruch 1 oder 2, **dadurch gekennzeichnet, dass** der Druckregler (4) das Vorsteuerventil (23) umfasst.

4. Druckluftversorgungseinrichtung nach einem der Ansprüche 1 bis 3, **dadurch gekennzeichnet, dass** eine Steuer- und/oder Regelelektronik (24) vorgesehen ist, die das Vorsteuerventil (23) steuert und/oder regelt.

5. Druckluftversorgungseinrichtung nach einem der Ansprüche 1 bis 4, **dadurch gekennzeichnet, dass** die Versorgungsleitung (18) den Druckregler (4) mit dem Mehrkreisschutzventil (13 bis 16) verbindet.

6. Druckluftversorgungseinrichtung nach einem der Ansprüche 1 bis 5, **dadurch gekennzeichnet, dass** wenigstens ein Drucksensor (12, 35 bis 38) vorgesehen ist.

7. Druckluftversorgungseinrichtung nach Anspruch 6, **dadurch gekennzeichnet, dass** wenigstens ein Drucksensor (12) zum Messen des Drucks in der Verbindungsleitung (18) vorgesehen ist.

8. Druckluftversorgungseinrichtung nach Anspruch 7, **dadurch gekennzeichnet, dass** zwischen dem Druckregler (4) und der Verbindungsleitung (18) und insbesondere dem Drucksensor (12) zum Messen des Drucks ein Sperrventil (6), insbesondere ein Rückschlagventil, vorgesehen ist.

9. Druckluftversorgungseinrichtung nach einem der Ansprüche 6 bis 8, **dadurch gekennzeichnet, dass** der Druck in oder hinter jedem Kreis des Mehrkreisschutzventils (13 bis 16) mittels Drucksensoren (35 bis 38) messbar ist.

10. Druckluftversorgungseinrichtung nach einem der Ansprüche 1 bis 9, **dadurch gekennzeichnet, dass** zwischen dem Vorsteuerventil (23) und der Schaltvorrichtung (1a) eine Drossel (39) vorgesehen ist.

11. Druckluftversorgungseinrichtung nach einem der Ansprüche 1 bis 10, **dadurch gekennzeichnet, dass** der Kompressor (1) ein Energiesparkompressor ist.

12. Druckluftanlage mit einer Druckluftversorgungseinrichtung nach einem der Ansprüche 1 bis 11.

## Claims

1. Compressed air supply apparatus for pneumatic systems of vehicles, comprising a multi-circuit protection valve (13 to 16), a pressure regulator (4), a pilot valve (23), a supply line (18) for supplying the circuits of the multi-circuit protection valve (13 to 16) with compressed air and a compressor (1) which is switchable by means of a pneumatic switching device (1a), **characterised in that** the pilot valve (23) is connected to the switching device (1a) via a fast-acting venting valve (40) having an inlet connected to the pilot valve (23), an outlet connected to the switching device (1a) via a pneumatic control line (10a) and an atmospheric outlet, wherein the pilot valve (23) controls the pressure regulator (4) and the switching device (1a), wherein the fast-acting venting valve (40) is designed to let compressed air applied to the inlet of the fast-acting venting valve (40) which is connected to the pilot valve (23) to pass towards the switching device (1a) for ventilating the pneumatic control line (1a) to the switching device (1a) and to vent the pneumatic control line (10a) to the switching device (1a) at an inversion of the pilot valve (23) via the atmospheric outlet of the fast-acting venting valve (40) for venting the control line (10a).

2. Compressed air supply apparatus according to claim 1, **characterised in that** the pilot valve (23) is a solenoid valve.

3. Compressed air supply apparatus according to claim 1 or 2, **characterised in that** the pressure regulator (4) includes the pilot valve (23).

4. Compressed air supply apparatus according to any of claims 1 to 3, **characterised in that** open- and/or closed-loop control electronics (24) are provided for the open- and/or closed-loop control of the pilot valve (23).

5. Compressed air supply apparatus according to any of claims 1 to 4, **characterised in that** the supply line (18) connects the pressure regulator (4) to the multi-circuit protection valve (13 to 16).

6. Compressed air supply apparatus according to any of claims 1 to 5, **characterised in that** at least one pressure sensor (12, 35 to 38) is provided.

7. Compressed air supply apparatus according to claim 6, **characterised in that** at least one pressure sensor (12) is provided for measuring the pressure in the connecting line (18).

8. Compressed air supply apparatus according to claim 7, **characterised in that** a check valve (6), in particular a non-return valve, is provided between the pressure regulator (4) and the connecting line (18) and in particular the pressure sensor (12) for measuring the pressure.

9. Compressed air supply apparatus according to any of claims 6 to 8, **characterised in that** the pressure in or downstream of each circuit of the multi-circuit protection valve (13 to 16) can be measured by means of pressure sensors (35 to 38).

10. Compressed air supply apparatus according to any of claims 1 to 9, **characterised in that** a restrictor (39) is provided between the pilot valve (23) and the switching device (1a).

11. Compressed air supply apparatus according to any of claims 1 to 10, **characterised in that** the compressor (1) is an energy-saving compressor.

12. Pneumatic system comprising a compressed air supply apparatus according to any of claims 1 to 11.

## Revendications

1. Installation d'alimentation en air comprimé pour des systèmes d'air comprimé de véhicules, comprenant une vanne (13 à 16) de sécurité à plusieurs circuits, un régleur (4) de pression, une vanne (23) pilote, un conduit (18) d'alimentation pour l'alimentation en air comprimé des circuits de la vanne (13) de sécurité à plusieurs circuits et un compresseur (1), qui peut être branché au moyen d'un dispositif (1a) pneumatique de commutation, **caractérisée en ce que** la vanne (23) pilote est reliée au dispositif (1a) de commutation par une soupape (40) de mise à l'atmosphère rapide, qui a une entrée reliée à la vanne (23) pilote, une sortie reliée au dispositif (1a) de commutation par un conduit (10a) pneumatique de commande et une sortie à l'atmosphère, la vanne (23) pilote commandant le régleur (4) de pression et le dispositif de commutation, la soupape (40) de mise à l'atmosphère rapide étant constituée pour laisser passer en direction du dispositif (1a) de commutation, pour l'alimentation en air du conduit (10a) pneumatique de commande pour le dispositif (1a) de commutation, de l'air comprimé s'appliquant à l'entrée de la soupape (40) de mise à l'atmosphère rapide reliée à la vanne (23) pilote et pour la mise à l'atmosphère du conduit (10a) de commande, pour mettre à l'atmosphère par la sortie à l'atmosphère de la soupape (40) de mise à l'atmosphère rapide du conduit (10a) pneumatique de commande pour le dispositif (1a) de commutation lors d'une inversion de la vanne (23) pilote.

2. Installation d'alimentation en air comprimé suivant la revendication 1, **caractérisée en ce que** la vanne (23) pilote est une électrovanne.

3. Installation d'alimentation en air comprimé suivant la revendication 1 ou 2, **caractérisée en ce que** le régleur (4) de pression comprend la vanne (23) pilote.

4. Installation d'alimentation en air comprimé suivant l'une des revendications 1 à 3, **caractérisée en ce qu'**il est prévu une électronique (24) de commande et/ou de régulation, qui commande et/ou régule la vanne (23) pilote.

5. Installation d'alimentation en air comprimé suivant l'une des revendications 1 à 4, **caractérisée en ce que** le conduit (18) d'alimentation met le régleur (4) de pression en communication avec la vanne (13 à 16) de sécurité à plusieurs circuits.

6. Installation d'alimentation en air comprimé suivant l'une des revendications 1 à 5, **caractérisée en ce qu'**il est prévu au moins un capteur (12, 35 à 38) de pression.

7. Installation d'alimentation en air comprimé suivant la revendication 6, **caractérisée en ce qu'**au moins un capteur (12) de pression est prévu pour la mesure de la pression dans le conduit (18) de communication.

8. Installation d'alimentation en air comprimé suivant la revendication 7, **caractérisée en ce qu'**il est prévu, entre le régleur (4) de pression et le conduit (18) de communication, et notamment le capteur (12) de pression de mesure de la pression, une vanne (6) d'arrêt, notamment un clapet antiretour.

9. Installation d'alimentation en air comprimé suivant l'une des revendications 6 à 8, **caractérisée en ce que** la pression dans ou derrière chaque circuit de la vanne (13 à 16) de sécurité à plusieurs circuits peut être mesurée au moyen de capteurs (35 à 38) de pression.

10. Installation d'alimentation en air comprimé suivant l'une des revendications 1 à 9, **caractérisée en ce qu'**il est prévu un étranglement (39) entre la vanne (23) pilote et le dispositif (1a) de commutation.

11. Installation d'alimentation en air comprimé suivant l'une des revendications 1 à 10, **caractérisée en ce que** le compresseur (1) est un compresseur à économie d'énergie.

12. Système d'air comprimé comprenant une installation d'alimentation en air comprimé suivant l'une des revendications 1 à 11.
